# FASCICULE DE BREVET EUROPEEN

(11) **EP 2 301 164 B1**
(45) Date de publication et mention de la délivrance du brevet: **11.07.2012**
(21) Numéro de dépôt: 09761720.3
(22) Date de dépôt: 09.06.2009
(51) Int. Cl.: H04B 3/50

(54) **SYSTÈME DE TRANSMISSION D'UN SIGNAL ÉLECTRIQUE, NOTAMMENT FRÉQUENTIEL ET DISPOSITIF DE MESURE DE RAYONNEMENTS ÉQUIPE D'UN TEL SYSTÈME**
SYSTEM ZUM ÜBERTRAGEN EINES ELEKTRISCHEN SIGNALS, INSBESONDERE FREQUENZBEZOGENEN UND STRAHLUNGSMESSEINRICHTUNG, DIE MIT EINEM SOLCHEN SYSTEM AUSGESTATTET IST
SYSTEM FOR TRANSMITTING AN ELECTRICAL SIGNAL, IN PARTICULAR FREQUENCY-RELATED AND RADIATION MEASUREMENT DEVICE EQUIPPED WITH SUCH A SYSTEM

(30) Priorité: 10.06.2008 FR 0803220
(43) Date de publication de la demande: 30.03.2011
(73) Titulaire: COMMISSARIAT A L'ENERGIE ATOMIQUE ET AUX ENERGIES ALTERNATIVES, 75015 Paris (FR)
(72) Inventeur: BOURBOTTE, Jean-Michel, F-77930 Chatilly en Bierre (FR); BARBOT, Loic, F-75015 Paris (FR); NORMAND, Stephane, F-78200 Mantes la Jolie (FR); KONDRASOVS, Vladimir, F-91120 Palaiseau (FR)
(74) Mandataire: Lucas, Laurent Jacques
(86) Numéro de dépôt international: PCT/EP2009/057120
(87) Numéro de publication internationale: WO 2009/150157

(56) Documents cités:
- US-A- 2 824 238
- US-A- 5 089 886
- US-A- 5 113 159
- US-A- 5 321 372

## Description

La présente invention concerne un système de transmission d'un signal électrique, notamment fréquentiel. Elle concerne également un dispositif de mesure de rayonnements équipés d'un tel système.

L'invention s'applique par exemple pour la transmission de signaux de mesures en environnement fortement perturbés électromagnétiquement.

Le transport des signaux électriques revêt un caractère primordial dans le fonctionnement optimal des systèmes de mesures. En effet, une mauvaise qualité de la transmission peut compliquer, voire empêcher l'exploitation des mesures. Ce problème devient d'autant plus aigu que la transmission se fait en environnement électromagnétique fortement perturbé et sur de grandes distances.

Il est connu que la transmission monofilaire pose des problèmes de propagation des signaux. En particulier dans le cas d'une transmission de signaux différentiels, des signaux parasites se superposent aux signaux utiles, dans ce cas on utilise des blindages physiques plus ou moins complexes pour en limiter les effets.

La transmission bifilaire est utilisée mais en général seulement pour des mesures de courant. Il n'y a pas de transmission de signaux fréquentiels par liaison bifilaire, en raison notamment de la difficulté de mise en oeuvre du système de mesure situé en aval. Les parasites qui peuvent apparaître sur le signal en courant restent alors limités aux courants de fuite. La présence d'un anneau de garde permet généralement d'en limiter l'impact.

Un document US-A-2 824 238 divulgue un circuit de transmission d'un signal électrique à deux conducteurs. Un document US-A-5 089 886 décrit un dispositif pour la transmission à distance de signaux, notamment de signaux vidéo. Un document US-A-5 321 372 divulgue un appareil et une méthode pour minimiser les émissions et la sensibilité de câbles terminaux. Un document US-A-5 113 159 décrit un système de communication à dispositif éliminant les parasites électromagnétiques.

Un but de l'invention est notamment de permettre la transmission de signaux en milieux fortement perturbés, cette transmission étant insensible aux parasites électromagnétiques extérieurs. A cet effet, l'invention a pour objet un système système de transmission d'un signal électrique, comportant deux lignes conductrices composées chacune d'un conducteur central entouré d'une gaine conductrice, lesdites lignes étant couplées et isolées l'une de l'autres à chaque extrémité par un transformateur,
- le conducteur central d'une première ligne étant relié en entrée dudit système à l'entrée d'une bobine d'un premier transformateur, ladite bobine étant apte à recevoir à son entrée le signal électrique à transmettre, et étant relié en sortie dudit système à une bobine du deuxième transformateur, ladite bobine délivrant le signal électrique ;
- le conducteur central de l'autre ligne étant relié à une deuxième bobine du premier transformateur et étant relié à une deuxième bobine du deuxième transformateur.

L'invention a également pour objet un dispositif de mesures de rayonnements comportant au moins:
- un capteur de rayonnements délivrant un signal électrique représentatif d'un rayonnement ;
- un système de transmission tel que décrit précédemment, connecté au capteur et destiné à transmettre ledit signal électrique.

Avantageusement, l'invention permet de tirer parti de la propagation des signaux sur des systèmes de transmission bifilaire tout en étant transparent vis-à-vis des systèmes de mesures situé en aval de la transmission qui peuvent être exactement les mêmes que si c'était une transmission monofilaire

D'autres caractéristiques et avantages de l'invention apparaîtront à l'aide de la description qui suit faite en regard de dessins annexés qui représentent :
- la figure 1, un schéma électrique d'un exemple de système de transmission selon l'art antérieur ;
- la figure 2, le schéma électrique d'un exemple de réalisation d'un système de transmission selon l'invention ;
- la figure 3, une illustration des performances d'un système selon l'invention par la représentation de signaux transmis ;
- la figure 4, un mode de réalisation possible d'un système de transmission utilisable selon l'invention ;
- la figure 5, un autre mode de réalisation possible d'un système de transmission utilisable selon l'invention.

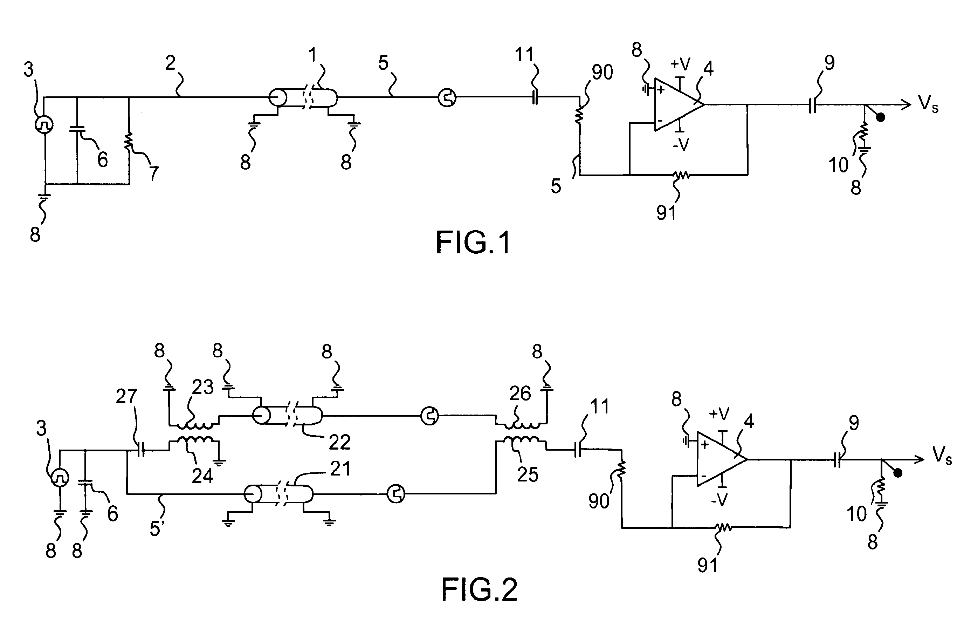

La figure 1 illustre un exemple de réalisation d'un système de transmission classique, de type monofilaire. Le système comporte une ligne de type coaxiale 1. Cette ligne coaxiale adaptée pour véhiculer un signal fréquentiel comporte un conducteur central entouré d'une gaine conductrice reliée à un potentiel de référence 8, le conducteur central et la gaine étant séparées par un matériau diélectrique.

Le conducteur central est prolongé, ou relié, d'un côté à un générateur de signal 3, de type fréquentiel ou impulsionnel, via un élément de ligne conductrice 2. De l'autre côté, le conducteur central est relié à un amplificateur 4 connecté en suiveur via un élément de ligne conductrice 5. Le générateur de signal 3 est par exemple un détecteur, un capteur ou tout autre instrument de mesure délivrant un signal représentatif d'une grandeur physique. On considèrera par la suite à titre d'exemple qu'il s'agit d'un capteur, notamment d'un capteur de rayonnements. A ce titre ce composant 3 peut comporter par exemple un coupleur optoélectronique.

Le signal fourni est, par exemple, mis en forme par un filtre composé d'un condensateur 6 et d'une résistance 7 en parallèle. Une extrémité du filtre est reliée à une borne du générateur 3 et l'autre extrémité est relié au potentiel de référence 8, appelé par la suite potentiel de masse, et formant le zéro électrique. Du côté de la sortie, le signal issu de la ligne coaxiale est amplifié par un amplificateur 4 monté en suiveur. Un condensateur de découplage 11 est par exemple placé en amont de l'amplificateur sur la ligne 5. En aval de ce condensateur, la ligne est connectée à une première résistance 90 reliée à son autre extrémité à l'entrée négative de l'amplificateur. Une deuxième résistance 91 est reliée entre cette entrée négative et la sortie de l'amplificateur. Le signal est alors amplifié de façon classique dans le rapport des résistances.

L'entrée positive de l'amplificateur 4, est reliée au potentiel de masse 8. L'amplificateur est alimenté entre un potentiel +V et un potentiel -V. La sortie de l'amplificateur 4 fournit le signal de sortie Vs, éventuellement après passage dans un filtre composé d'un condensateur 9 et d'une résistance 10.

La figure 2 illustre un système de transmission selon l'invention. Le système de transmission de la figure 2 est de type bifilaire dans ce sens qu'il comporte deux lignes de type coaxial couplées 21, 22 du type de celle décrite pour le système de la figure 1. Ces lignes 21, 22 sont isolées à chaque extrémité par un transformateur.

Ainsi, le système comporte un système de bobines d'isolement 23, 24, 25, 26 de part et d'autre des deux lignes. L'isolation galvanique ainsi réalisée entre les deux lignes coaxiales permet de profiter de l'effet différentiel de la propagation du signal, tout en maintenant le dispositif électronique standard utilisé pour le traitement issu du capteur 3, défini pour une connection de type monofilaire. En effet, le système en aval des bobines de sortie 25, 26 est identique à ce qui est traditionnellement installé pour le traitement du signal. Le système selon l'invention n'impose donc pas de redéfinition ou de modification des circuits électroniques de traitement tout en permettant un gain significatif sur le rapport signal à bruit.

Le système de la figure 2 comporte donc une première ligne coaxiale 21 reliée en sortie du capteur 3. La deuxième ligne coaxiale 22 est reliée à la sortie du capteur 3 via un premier système de bobines 23, 24. Plus particulièrement, la ligne coaxiale 22 est reliée à une première bobine 23 elle-même couplée à une deuxième bobine 24 reliée au capteur 3 via un condensateur de découplage 27 par exemple. L'autre extrémité de cette bobine 24 est reliée au potentiel de masse 8. L'extrémité de la première bobine 23, opposée à celle relié à la ligne coaxiale 22.

La sortie de la première ligne coaxiale 21 est reliée en sortie à une troisième bobine 25 elle-même couplée à une quatrième bobine 26 reliée à la sortie de la deuxième ligne coaxiale 22. L'extrémité de la quatrième bobine 26 non reliée à la ligne coaxiale est reliée au potentiel de référence 8. L'extrémité de la troisième bobine 25 non reliée à la ligne coaxiale 21 forme la sortie de la liaison bifilaire ainsi réalisée. Elle est par exemple reliée à un circuit électronique de sortie 11, 4, 90, 91, amplificateur, du type de celui de la figure 1.

Les deux systèmes de bobines 23, 24, 25, 26 en entrée et en sortie de la liaison bifilaire forment une isolation galvanique entre les deux lignes 21, 22. La propagation du signal se fait de façon différentielle entre les deux les deux lignes, ce qui permet de limiter significativement l'effet des environnements parasites sur la qualité de l'information. Les deux premières bobines 23, 24, couplées entre elles forment un premier composant transformateur. Les deux autres bobines 25, 26 couplées elles aussi entre elles forment un deuxième composant transformateur. En pratique, ces transformateurs ont des rapports de tensions primaire à secondaire égaux à 1. Il est cependant possible de prévoir d'autres rapports de tensions.

L'invention utilise avantageusement ces deux transformateurs 23, 24, 25, 26. Ce type de composant passif est particulièrement résistant à l'effet de dose. Ainsi, les composants utilisés pour réaliser la fonction différentielle sont des composants passifs présentant une bonne tenue aux rayonnements. Un système selon l'invention gagne donc en immunité aux parasites tout en conservant sa grande résistance vis-à-vis des effets d'un rayonnement ionisant environnant par exemple.

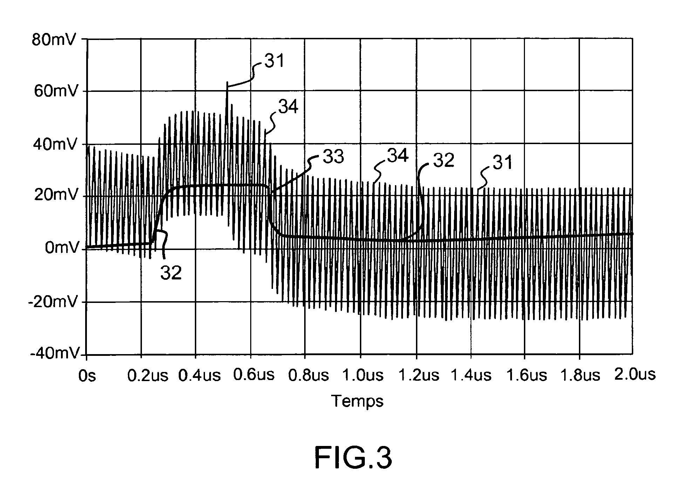

La figure 3 illustre l'amélioration significative apportée par un système de transmission selon l'invention. Une première courbe 31 représente la propagation d'un signal en un point donné de la ligne, en fonction du temps, pour un système monofilaire du type de celui de la figure 1. A cet effet, l'axe des abscisses représente le temps, les valeurs variant à titre d'exemple entre 0 et 2 µs, et l'axe des ordonnées représente l'amplitude du signal, variant par exemple entre - 40 mV et + 80 mV.

Une deuxième courbe 32 représente la propagation du signal dans le système bifilaire selon l'invention illustré par la figure 2.

Dans les deux cas, le signal généré par le capteur 3 est le même, il s'agit d'une impulsion. Il apparaît très nettement que pour une même source de bruit de rayonnement électromagnétique, perturbant une liaison monofilaire, le système bifilaire permet de réduire considérablement l'impact de ce rayonnement sur l'impulsion transmise 33. La courbe 31 représentative du signal transmis par la ligne de la figure 1 montre en effet que l'impulsion transmise est très nettement parasitée par du bruit 34 alors que la courbe 32 représente la transmission d'une impulsion où ce bruit n'apparaît plus.

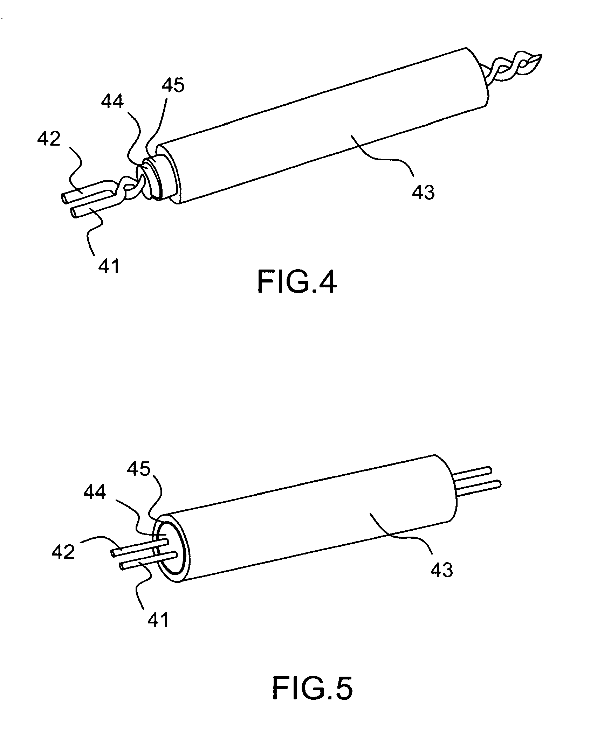

La figure 4 illustre un exemple de réalisation possible d'une ligne bifilaire utilisée dans un système selon l'invention. Dans ce cas, les deux conducteurs centraux 41, 42 sont placés à l'intérieur d'une même gaine. Les conducteurs sont noyés dans un diélectrique cylindrique 44 entouré d'une gaine conductrice 45, elle-même recouverte par exemple d'une gaine protectrice isolante 43. Dans le cas de la figure 4, les deux conducteurs sont torsadés, ce qui limite encore plus l'effet des rayonnements parasites et donc du bruit.

La figure 5 illustre un autre mode de réalisation possible où les conducteurs centraux 41, 42 ne sont pas torsadés mais juxtaposés. Dans ce cas, chaque conducteurs 41, 42 n'est pas situé au centre de la gaine, c'est leur médiatrice qui est située au centre.

D'autres modes de réalisation sont possibles. En particulier, il est possible de ne pas placer les deux conducteurs 41, 42 dans une même gaine et de prévoir ainsi deux lignes physiquement séparées où chaque conducteur 41, 42 est dans une gaine distincte. On utilise dans ce cas deux câbles monofilaires complémentaires en parallèle distincts physiquement.

Parmi les avantages de ce système, l'impédance caractéristique de la ligne peut être adaptée à chaque type d'utilisation, ce qui en facilite la transmission d'un signal fréquentiel. Ainsi, pour une application à certains circuits électroniques existant du domaine nucléaire, l'impédance caractéristique peut être égale avantageusement à 25 ou 50 ohms.

Une ligne de transport selon l'invention est différentielle. Néanmoins, de par sa conception, un système selon l'invention ne nécessite pas d'amplificateur différentiel pour traiter l'information. Comme le montre le schéma électrique de réalisation de la figure 2, il n'est pas nécessaire de modifier les circuits électroniques d'amplification 90, 91, 4 et de traitement existant. Seule une modification du câble avec les deux transformateurs 23, 24, 25, 26 est nécessaire pour profiter de l'avantage de la liaison différentielle.

Il peut être également possible de véhiculer une haute tension de polarisation par simple ajout de deux résistances symétriques d'injection sur les deux fils de la ligne différentielle.

L'invention peut s'appliquer avantageusement au transport de signaux issus de détecteurs de rayonnement, par exemple des rayonnements de chambres de fission dans des installations nucléaires.

L'invention peut également s'appliquer à des applications mettant en jeu le transport de signaux fréquentiels à large bande, de faible amplitude, sur de grandes distances et en environnement électromagnétique fortement perturbateur.

## Revendications

1. Système de transmission d'un signal électrique, comportant deux lignes conductrices (21, 22) composées chacune d'un conducteur central (41, 42) entouré d'une gaine conductrice (45), lesdites lignes (21, 22) étant couplées l'une à l'autre à chaque extrémité par un transformateur, un premier transformateur étant formé d'une première bobine (23) et d'une deuxième bobine (24), un deuxième transformateur étant formé d'une troisième bobine (25) et d'une quatrième bobine (26), le conducteur central d'une première ligne (21) étant relié en entrée dudit système à l'entrée de la deuxième bobine (24), ladite deuxième bobine (24) étant apte à recevoir à son entrée le signal électrique à transmettre, et étant reliée en sortie dudit système à la troisième bobine (25), ladite troisième bobine (25) délivrant le signal électrique, **caractérisé en ce que** le conducteur central de la deuxième ligne (22) est relié à la première bobine (23) du premier transformateur et est relié à la quatrième bobine (26), les entrées des bobines (23, 26) non reliées aux lignes (21, 22) étant connectées à un potentiel de référence (8) de sorte que les lignes (21, 22) soient isolées l'une de l'autre.

2. Système de transmission selon la revendication 1, **caractérisé en ce que** la gaine (45) d'une ligne conductrice est reliée à un potentiel de référence (8).

3. Système de transmission selon l'une quelconque des revendications précédentes, **caractérisé en ce qu'**un condensateur de découplage (27) est connecté entre l'entrée de la première ligne (21) et la deuxième bobine (24) du premier transformateur.

4. Système de transmission selon l'une quelconque des revendications précédentes, **caractérisé en ce que** les conducteurs centraux (41, 42) sont placés dans un matériau diélectrique (44) à l'intérieur d'une même gaine conductrice (45).

5. Système de transmission selon la revendication 4, **caractérisé en ce que** les conducteurs centraux (41, 42) sont torsadés entre eux.

6. Système selon l'une quelconque des revendications précédentes, **caractérisé en ce que** le signal est de type fréquentiel.

7. Dispositif de mesure de rayonnements, **caractérisé en ce qu'**il comporte au moins :
- un capteur de rayonnements (3) délivrant un signal électrique représentatif d'un rayonnement ;
- un système de transmission selon l'une quelconque des revendications précédentes, connecté au capteur et destiné à transmettre ledit signal électrique.

8. Dispositif selon la revendication 7, **caractérisé en ce qu'**un dispositif d'amplification (90, 91, 4) est connecté en sortie du système de transmission.

9. Dispositif selon l'une quelconque des revendications 7 ou 8, **caractérisé en ce que** le rayonnement est émis dans une chambre de fission nucléaire.

## Claims

1. A system for transmitting an electrical signal, comprising two conducting lines (21, 22) each composed of a central conductor (41, 42) surrounded by a conducting sheath (45), said lines (21, 22) being coupled to each other at each end by a transformer, a first transformer being formed from a first coil (23) and a second coil (24), a second transformer being formed from a third coil (25) and a fourth coil (26), the central conductor of a first line (21) being linked at the input of said system to the input of the second coil (24), said second coil (24) being designed to receive at its input the electrical signal to be transmitted, and being linked at the output of said system to the third coil (25), said third coil (25) delivering the electrical signal, **characterised in that** the central conductor of the second line (22) is linked to the first coil (23) of the first transformer and is linked to the fourth coil (26), the inputs of the coils (23, 26) that are not linked to the lines (21, 22) being connected to a reference potential (8) so that the lines (21, 22) are isolated from each other.

2. The transmitting system according to claim 1, **characterised in that** the sheath (45) of a conducting line is linked to a reference potential (8).

3. The transmitting system according to any one of the preceding claims, **characterised in that** a decoupling capacitor (27) is connected between the input of the first line (21) and the second coil (24) of the first transformer.

4. The transmitting system according to any one of the preceding claims, **characterised in that** the central conductors (41, 42) are placed in a dielectric material (44) inside the same conducting sheath (45).

5. The transmitting system according to claim 4, **characterised in that** the central conductors (41, 42) are twisted together.

6. The system according to any one of the preceding claims, **characterised in that** the signal is of the frequency type.

7. A radiation measurement device, **characterised in that** it comprises at least:
- one radiation sensor (3) delivering an electrical signal that represents a radiation;
- one transmitting system according to any one of the preceding claims, connected to the sensor and destined to transmit said electrical signal.

8. The device according to claim 7, **characterised in that** an amplification device (90, 91, 4) is connected at the output of the transmitting system.

9. The device according to claim 7 or 8, **characterised in that** the radiation is emitted in a nuclear fission chamber.

## Patentansprüche

1. System zum Übertragen eines elektrischen Signals, das zwei Leitungen (21, 22) umfasst, die jeweils aus einem zentralen Leiter (41, 42) bestehen, der von einem leitenden Mantel (45) umgeben ist, wobei die Leitungen (21, 22) an beiden Enden durch einen Transformator miteinander gekoppelt sind, wobei ein erster Transformator von einer ersten Spule (23) und einer zweiten Spule (24) gebildet wird, ein zweiter Transformator von einer dritten Spule (25) und einer vierten Spule (26) gebildet wird, wobei der zentrale Leiter einer ersten Leitung (21) am Eingang des Systems mit dem Eingang der zweiten Spule (24) verbunden ist, wobei die zweite Spule (24) so ausgelegt ist, dass sie an ihrem Eingang das zu übertragende elektrische Signal empfängt, und am Ausgang des Systems mit der dritten Spule (25) verbunden ist, wobei die dritte Spule (25) das elektrische Signal liefert, **dadurch gekennzeichnet, dass** der zentrale Leiter der zweiten Leitung (22) mit der ersten Spule (23) des ersten Transformators und mit der vierten Spule (26) verbunden ist, wobei die Eingänge der nicht mit den Leitungen (21, 22) verbundenen Spulen (23, 26) mit einem Referenzpotenzial (8) verbunden sind, so dass die Leitungen (21, 22) voneinander isoliert sind.

2. Übertragungssystem nach Anspruch 1, **dadurch gekennzeichnet, dass** der Mantel (45) einer Leitung mit einem Referenzpotential (8) verbunden ist.

3. Übertragungssystem nach einem der vorherigen Ansprüche, **dadurch gekennzeichnet, dass** ein Abkopplungskondensator (27) zwischen dem Eingang der ersten Leitung (21) und der zweiten Spule (24) des ersten Transformators geschaltet ist.

4. Übertragungssystem nach einem der vorherigen Ansprüche, **dadurch gekennzeichnet, dass** die zentralen Leiter (41, 42) in einem dielektrischen Material (44) im selben leitenden Mantel (45) platziert sind.

5. Übertragungssystem nach Anspruch 4, **dadurch gekennzeichnet, dass** die zentralen Leiter (41, 42) miteinander verdrillt sind.

6. System nach einem der vorherigen Ansprüche, **dadurch gekennzeichnet, dass** das Signal vom Frequenztyp ist.

7. Strahlungsmessvorrichtung, **dadurch gekennzeichnet, dass** sie wenigstens Folgendes umfasst:
- einen Strahlungssensor (3), der ein elektrisches Signal liefert, das eine Strahlung repräsentiert;
- ein Übertragungssystem nach einem der vorherigen Ansprüche, das mit dem Sensor verbunden und zum Übertragen des elektrischen Signals bestimmt ist.

8. Vorrichtung nach Anspruch 7, **dadurch gekennzeichnet, dass** eine Verstärkungsvorrichtung (90, 91, 4) am Ausgang des Übertragungssystems angeordnet ist.

9. Vorrichtung nach Anspruch 7 oder 8, **dadurch gekennzeichnet, dass** die Strahlung in einer Kernspaltungskammer ausgesendet wird.
